# EUROPÄISCHE PATENTSCHRIFT

(11) **EP 3 710 287 B1**
(45) Veröffentlichungstag und Bekanntmachung des Hinweises auf die Patenterteilung: **24.01.2024**
(21) Anmeldenummer: 18759042.7
(22) Anmeldetag: 02.08.2018
(51) Int. Cl.: B60C 11/16

(54) **SPIKE**
SPIKE
SPIKE

(30) Priorität: 16.11.2017 DE 102017220468
(43) Veröffentlichungstag der Anmeldung: 23.09.2020
(73) Patentinhaber: Continental Reifen Deutschland GmbH, 30165 Hannover (DE)
(72) Erfinder: SCHLITTENHARD, Jan, 30419 Hannover (DE); LANGE, Holger, 30419 Hannover (DE)
(74) Vertreter: Continental Corporation
(86) Internationale Anmeldenummer: PCT/EP2018/070962
(87) Internationale Veröffentlichungsnummer: WO 2019/096455

(56) Entgegenhaltungen:
- WO-A1-2019/091609
- DE-A1-102009 026 112
- DE-A1-102015 223 091

## Beschreibung

Die Erfindung betrifft einen Spike zum Verankern in einem Spikeloch eines Laufstreifens eines Fahrzeugluftreifens mit einem einen Fußflansch aufweisenden Spikekörper und mit einem Spikepin aus Hartmetall, welcher in einem im Spikekörper befindlichen Einsatz verankert ist und mit einem Endabschnitt den Spikekörper überragt, wobei der Fußflansch seitliche Begrenzungsflächen und der Einsatz einen den Fußflansch mitbildenden Fußteil und einen den Spikepin aufnehmenden Pinhalter aufweist, und wobei der Spikekörper, ggf. abgesehen vom Einsatz, aus nicht-metallischem Material besteht, welches am Fußflansch den Fußteil ummantelt.

Spikes werden üblicherweise durch eine Kombination aus Formschluss und Klemmung in den Spikelöchern des Laufstreifens von Fahrzeugluftreifen gehalten. Herkömmliche Spikes bestehen aus einem Spikekörper aus Aluminium oder Stahl, in welchem der über die Laufstreifenoberfläche hervorstehende Spikepin, der aus Hartmetall besteht, gehalten ist.

Es ist üblich, auf winterlichen Fahrbahnen zur Erhöhung der Verkehrssicherheit Streugut zu verwenden. Der Einsatz von Sand wurde in den letzten Jahren zugunsten von Streusplit reduziert, da Sand dazu neigt, von Reifen zu Staub oder zu Feinstaub zermahlen zu werden, welcher zum Schutz der Gesundheit der Bevölkerung reduziert oder vermieden werden soll. Der Einsatz von Streusplit führt jedoch dazu, dass die üblichen, in Fahrzeugluftreifen eingesetzten Spikes verstärkt abgenützt werden, insbesondere wenn der Spikekörper aus Aluminium besteht.

Es ist daher bereits vorgeschlagen worden, Spikes mit Spikekörpern aus Gummi oder aus Kunststoff zu verwenden. Aus der DE 2 202 373 A1 ist ein Kunststoff-Spike bekannt, welcher aus einem Hartmetallstift und einer Kunststoffummantelung besteht, wobei der Hartmetallstift mittels Ultraschallschwingungen in den Kunststoffschaft eingebettet wird. Bei weiteren bekannten Herstellungsmethoden von Kunststoffspikes wird der Hartmetallpin mit einem thermoplastischen Kunststoff umspritzt.

Aus der WO 2017/0888995 A1 sind Spikes bekannt, bei welchen der Spikepin und/oder der aus Kunststoff oder Aluminium bestehende Fußflansch zumindest abschnittsweise in einen Gummimantel bzw. in Gummimaterial eingebettet ist bzw. sind. Die besonderen Vorteile dieser Ausführungen liegen in den grundsätzlichen Materialeigenschaften des Gummikörpers. Durch seine geringe Dichte von etwa 1 g/cm³ ist Gummi im Vergleich zu Aluminium und Stahl besonders leicht. Der Austausch von Aluminium und Stahl durch Gummi als Körpermaterial führt daher zu einer Reduktion des Spikegewichtes, welches sich besonders positiv auf den Straßenverschleiß und auf die Feinstaubbildung auswirkt. Der Straßenverschleiß wird hauptsächlich durch die Aufschlagenergie des Spikes bestimmt. Die elastischen Materialeigenschaften des Gummis haben noch weitere Vorteile. Zum einen dämpft das elastische Körpermaterial Stöße, sodass geringere Kräfte auf Steine in der Straßenoberfläche oder auf Streugutpartikel wirken. Somit reduzieren sich auch dadurch Straßenverschleiß und Feinstaubbildung. Darüber hinaus sind Spikekörper aus Gummi jenen aus Aluminium oder Stahl im Abriebverhalten überlegen, da sie ein komplett anderes Verschleißverhalten aufweisen. Werden Steine des Straßenbelags und insbesondere Split von Streugut in der Nähe eines konventionellen Spikes vom Reifen überrollt, so verformt sich das Profil im Laufstreifen stark und weicht zur Seite aus. Der fixierte, starre Spike kann diesen Ausweichbewegungen nicht folgen. Dadurch bildet sich ein Spalt zwischen Spike und Gummi, welcher die Ober- und Mantelfläche des Spikekörpers dem abrasiven Angriff von Steinen aussetzt. Da Steine im Straßenbelag und Split üblicherweise eine höhere Härte als Aluminium und sogar als Stahl aufweisen, wird ein Spikekörper aus Aluminium oder Stahl stark abgeschliffen, wodurch sich die Spikekörperhöhe und der Durchmesser des Spikekörpers verringern. Dies führt dazu, dass die Spikelochkantenbereiche einem schneidenden Abrieb ausgesetzt sind. Sie erodieren, wodurch sich der Spalt zwischen Spike und umliegender Gummimatrix vergrößert. Dies begünstigt das Eindringen von Sand und kleineren Steinen, wodurch der Spikekörperabrieb weiter beschleunigt wird. Als Folge davon reduzieren sich die seitlichen Haltekräfte auf den Spike, was zu einer Reduktion der Wintereigenschaften durch starkes Verkippen, im schlimmsten Fall zum Spikeverlust, führt.

Die DE 10 2009 026112 A1 befasst sich mit einem herkömmlich ausgeführten Spike, welcher im Spikeloch eingeklebt wird, wobei in das Spikeloch zuerst eine Kapsel, die Flüssigklebstoff enthält, eingebracht wird, sodass der Spikefuß beim Einsetzen des Spikes die Kapsel öffnet, der Flüssigklebstoff austritt und den Spike im Spikeloch festklebt. Der Flüssigklebstoff kann auch ein Zwei-Komponenten-Kleber sein, wobei sich die zweite Komponente ebenfalls in einer Kapsel befinden kann oder der Spike vor dem Einführen in das Spikeloch mit der zweiten Komponente beschichtet wird. Bei jeder dieser Ausführungen härtet der Kleber unter Herstellung der Klebeverbindung aus, der ausgehärtete Klebstoff bildet eine dünne, harte Schicht zwischen einem Teilbereich des Spikekörpers und dem umgebenden Gummimaterial des Laufstreifens.

Der Erfindung liegt die Aufgabe zugrunde, einen Spike der eingangs genannten Art derart auszuführen, dass der Straßenverschleiß und die Feinstaubbildung noch weiter reduziert werden können, wobei die Griffeigenschaften des Spikes auf eisigem Untergrund, die Eisperformance, sowie ein optimaler Halt des Spikes im Laufstreifen gewährleistet sein sollen.

Die gestellte Aufgabe wird erfindungsgemäß durch einen Spike nach Anspruch 1 gelöst.

Bei erfindungsgemäß ausgeführten Spikes weist daher jener Teil, der für die Verankerung des Spikes im Gummimaterial des Laufstreifens hauptsächlich verantwortlich ist, nämlich der Fußflansch, eine Ummantelung aus einem schwingungsdämpfenden Gummimaterial auf. Erfindungsgemäße Spikes sind daher derart im Gummimaterial des Laufstreifens eingebettet, dass sie von außen auf sie wirkende Kräfte besonders gut aufnehmen und dämpfen können. Der Spikekörper ist ferner in jenem Bereich, der bei in einem Laufstreifen eingesetzten Spike unmittelbar an die Laufstreifenperipherie anschließt, vorzugs- und vorteilhafterweise aus einem abriebbeständigen und schnittfesten Material gefertigt, vorzugsweise aus einem entsprechenden Gummimaterial oder einem thermoplastischen Vulkanisat. Es passt sich daher der Abrieb des Spikekörpers im Wesentlichen an jenen der umgebenden Gummimatrix des Laufstreifens gut an. Dadurch bilden sich keine Spalten zwischen dem Spikekörper und dem Laufstreifenmaterial, wodurch der Spike über die Lebensdauer des Reifens seine Wintereigenschaften bzw. seine Eisperformance behält. Erfindungsgemäß ausgeführte Spikes weisen zudem ein für einen geringen Straßenverschleiß und eine geringe Feinstaubbildung vorteilhaftes geringes Gewicht auf.

Bei einer bevorzugten Ausführung besteht der Spikekörper aus dem den Fußflansch zumindest zum Teil ummantelnden schwingungsdämpfenden ersten Gummimaterial und aus dem abrieb- und schnittbeständigen Material.

Besonders bevorzugt ist eine Ausführung, bei der das schwingungsdämpfende erste Gummimaterial den Fußflansch und den Pinhalter des Einsatzes, letzteren zumindest zum Teil, ummantelt. Vor allem für den Fußflansch ist es vorteilhaft, eine Ummantelung aus einem schwingungsdämpfenden Material aufzuweisen.

Besonders bevorzugt ist des Weiteren eine Ausführungsvariante, bei der der Spikekörper zwischen der Ummantelung des Fußflansches aus dem schwingungsdämpfenden ersten Gummimaterial und dem Spikekörper-Teil aus dem abrieb- und schnittbeständigen Material zumindest einen weiteren Spikekörper-Teil aus einem weiteren Gummimaterial aufweist. Diese Maßnahme erlaubt es, Spikes mit besonderen Bettungs- und Dämpfungseigenschaften zur Verfügung zu stellen.

Bei einer möglichen Ausführungsvariante kann dabei die jeweilige Trennebene zwischen den unterschiedlichen Materialien quer zur Hochachse des Spikes bei einer alternativen Ausführung schräg zur Hochachse des Spikes, vorzugsweise zu dieser unter einem spitzen Winkel von 60 ° bis 85 ° geneigt, verlaufen. Diese Maßnahme gestattet es, Bettungs- und Dämpfungseigenschaften des Spikekörpers an die jeweilige Position des Spikes im Laufstreifen besonders gut anzupassen.

Die Erfindung betrifft ferner einen Fahrzeugluftreifen mit einem Laufstreifen mit Spikes, die erfindungsgemäß ausgeführt sind.

Weitere Merkmale, Vorteile und Einzelheiten der Erfindung werden nun anhand der Zeichnung, die Ausführungsbeispiele darstellt, näher beschrieben. Dabei zeigen
Fig. 1 und Fig. 2 Seitenansichten einer ersten Ausführungsform eines Spikes,
Fig. 3 eine Draufsicht auf den Spike gemäß der ersten Ausführungsform,
Fig. 4 und Fig. 5 Schnittdarstellungen entlang der Linien IV-IV und V-V der Fig. 3,
Fig. 6 und Fig. 7 Seitenansichten einer zweiten Ausführungsform eines erfindungsgemäßen Spikes,
Fig. 8 eine Draufsicht auf den Spike gemäß der zweiten Ausführungsform und
Fig. 9 und Fig. 10 Schnittdarstellungen entlang der Linien IX-IX und X-X der Fig. 8.

In der Beschreibung beziehen sich Bezeichnungen wie oben unten, senkrecht und dergleichen auf die Position des jeweiligen Spikes in den Figuren.

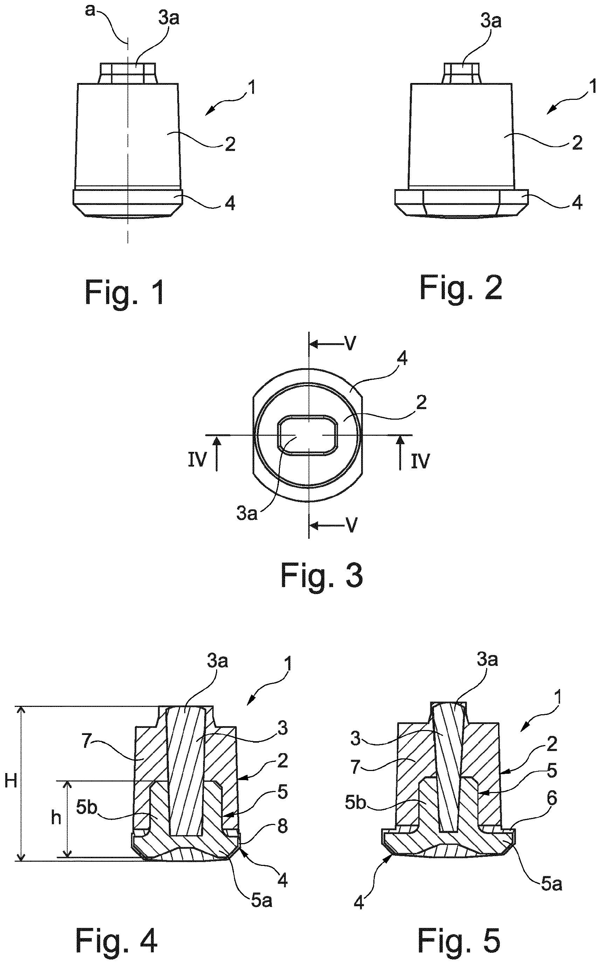

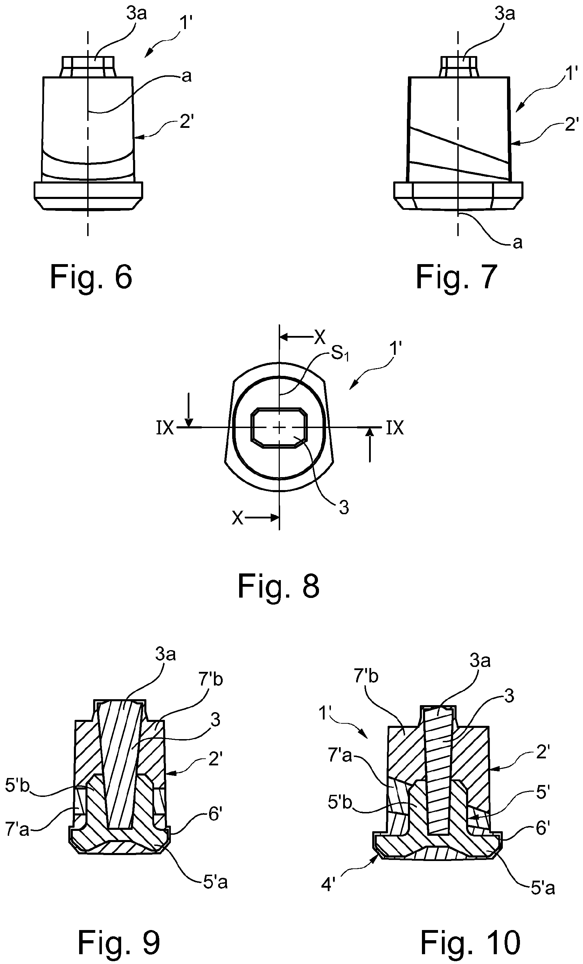

Die in den Figuren gezeigten Spikes 1 (Fig. 1 bis Fig. 5) und 1' (Fig. 6 bis Fig. 10) weisen eine zentrale Hochachse a auf und bestehen grundsätzlich aus einem Spikekörper 2, 2' und einem Einsatz 5, 5' mit einem Spikepin 3.

Bei der in den Figuren 1 bis 5 gezeigten Ausführung weist der Spikekörper 2 einen kreiszylindrischen oder annähernd kreiszylindrischen Teil auf, welcher mittig auf einem Fußflansch 4 sitzt, der in Draufsicht eine annähernd ovale Form mit zwei in der längeren Erstreckung des Ovals und parallel zueinander verlaufende Seitenflächen aufweist. Der kreiszylindrische Teilweist einen Durchmesser auf, der bei der gezeigten Ausführung der Breite des Fußflansches 4 entspricht, wobei der Durchmesser auch geringfügig kleiner oder größer sein kann als die Breite des Fußflansches 4. Bei der in den Figuren 6 bis 10 gezeigten Ausführung weist der Spikekörper 2' einen Teil auf, welcher in Draufsicht eine ovale Gestalt besitzt, wobei das Oval über die Höhenerstreckung des Spikekörpers 2konstant oder weitgehend konstant bleibt. Der oval gestaltete Teil ist etwa mittig auf einem Fußflansch 4' angeordnet, welcher in Draufsicht eine annähernd ovale Form mit zwei entlang der längeren Erstreckung des Ovals verlaufenden Seitenflächen aufweist, die zu einer in der in der Längserstreckung des Fußflansches 4' verlaufenden einzigen Symmetrieebene S₁ des Fußflansches 4' gegensinnig schräg und unter einem kleinen spitzen Winkel verlaufen. Bei der gezeigten Ausführung stimmt, in Draufsicht betrachtet, die Erstreckung des ovalen Teils des Spikekörpers 2`mit jener des Ovals des Fußflansches 4' überein.

Bei beiden Ausführungen befindet sich innerhalb des Spikekörpers 2, 2' der Einsatz 5, 5', welcher einen den Fußflansch 4, 4' mitbildenden und zu diesem im Wesentlichen analog gestalteten Fußteil 5a, 5'a und einen Pinhalter 5b, 5'b aufweist. Bei den gezeigten Ausführungen ist der Pinhalter 5b, 5'b zylindrisch oder annähernd zylindrisch gestaltet, in seiner Mitte ist der Spikepin 3 verankert. Die Höhe h des Einsatzes 5, 5' beträgt vorzugsweise 40 % bis 60 % der Spikehöhe H. Der Spikepin 3 überragt den Spikekörper 2, 2' mit einem Endabschnitt 3a in bekannter Weise.

Der Einsatz 5, 5' besteht vorzugsweise aus einem Metall, insbesondere aus Aluminium, kann jedoch auch aus einem Kunststoff, entweder aus einem Duroplast oder einem Thermoplast, bestehen.

Der Spikekörper 2, 2' besteht aus unterschiedlichen, nicht-metallischen Materialien, wie nachfolgend erläutert wird.

Bei der in den Figuren 1 bis 5 gezeigten Ausführung ist der Fußflansch 4von einem ersten Gummimaterial ummantelt, die Ummantelung 6 bedeckt auch die Oberseite des Fußflansches 4. Der Pinhalter 5b sowie der innerhalb des Spikekörpers 2 verlaufende Abschnitt des Spikepins 3 sind in ein zweiten Material eingebettet, welches einen Spikekörper-Teil 7 bildet. Dabei kann auch der den Spikekörper 2 überragende Endabschnitt 3a des Spikepins 3 mit einer dünnen Schicht dieses Materials überzogen sein.

Das Gummimaterial der Ummantelung 6 des Fußflansches 4 weist besonders gute schwingungsdämpfenden Eigenschaften auf. Zusammensetzungen von Kautschukmischungen, die sich zur Herstellung eines solchen Gummimaterials eignen, sind dem Reifenfachmann hinlänglich bekannt. Die Trennebene zwischen der Ummantelung 6 und dem Spikekörper-Teil 7 verläuft horizontal, daher im rechten Winkel zur Hochachse a des Spikes 1. Die Ummantelung 6 weist im Bereich des Fußflansches 4 großteils eine Schichtdicke von 0,5 bis 1,5 mm auf. Die Schichtdicke kann jedoch stellenweise auch höher sein, beispielsweise im Bereich einer an der Unterseite des Fußteiles 5a des Einsatzes 5 ausgebildeten Einbuchtung, die mit dem Gummimaterial der Ummantelung 6 befüllt ist.

Bei einer alternativen, gesondert nicht dargestellten Ausführung reicht die Ummantelung aus dem ersten Gummimaterial am Fußflansch 4 nur bis in den Bereich seiner seitlichen Begrenzungsflächen, hier schließt unmittelbar das zweite Material an.

Der Spikekörper-Teil 7 besteht aus einem schnittbeständigen und abriebbeständigen Material, entweder aus einem weiteren Gummimaterial oder aus einem thermoplastischen Vulkanisat. Zusammensetzungen von Kautschukmischungen zur Herstellung eines schnittbeständigen und abriebbeständigen Gummimaterials sind dem Reifenfachmann hinlänglich bekannt. Ein thermoplastisches Vulkanisat besteht bekannterweise aus zumindest einem Thermoplast und einem Elastomer, wobei der Thermoplast eine kontinuierliche Phase und das Elastomer eine in dieser fein verteilte disperse Phase bildet. In einem thermoplastischen Vulkanisat sind daher Elastomer-Partikel von Thermoplast umgeben. Der Thermoplast ist bzw. enthält insbesondere zumindest einen Thermoplast aus der Gruppe Polyurethan (PU), Polypropylen (PP), Polystyrol (PS), Polyamid (PA) oder Acrylnitril-Butadien-Styrol-Copolymer (ABS). Die Kautschukmischung des Elastomers enthält als Kautschuk zumindest einen der Kautschuke aus der Gruppe der Naturkautschuke (NR), synthetisches Polyisopren (IR), Polybutadien (BR), Styrol-Butadien-Kautschuk (SBR) und Nitril-Butadien-Kautschuk (NBR).

Bei der in den Figuren 6 bis 10 gezeigten Ausführungsform ist der Fußteil5'a ebenfalls von einem ersten Gummimaterial ummantelt, welches, analog zur ersten Ausführungsform, besonders gut schwingungsdämpfend ist. Die Ummantelung 6' reicht bis in den unteren Bereich des Pinhalters 5'b und bildet hier eine schräg, unter einem spitzen Winkel von beispielsweise 5° bis 30° zur Horizontalen verlaufende Trennebene zu einem im Schnitt streifenförmigen Spikekörper-Teil 7'a aus einem weiteren Gummimaterial, wobei der Teil 7`a den Pinhalter 5'b umläuft und wobei an den Teil 7'a ein Spikekörper-Teil 7'b aus einem schnittbeständigen und abriebbeständigen Material, entweder aus einem Gummimaterial oder aus einem thermoplastischen Vulkanisat, anschließt. Der Spikekörper-Teil 7'b umhüllt den oberen Abschnitt des Pinhalters 5'b und den innerhalb des Spikekörpers 2' verlaufenden Abschnitt des Spikepins 3 sowie gegebenenfalls den Endabschnitt 3a des Spikepins 3, letzteren dünnschichtig. Die Trennebene zwischen den beiden Spikekörper-Teilen 7'a und 7'b verläuft vorzugsweise analog schräg zur Trennebene zwischen der Ummantelung 6' und dem Spikekörper-Teil 7'a.

Insbesondere bei Spikes, die in laufrichtungsgebunden ausgestalteten Laufstreifen von Fahrzeugluftreifen eingesetzt sind, können durch die schrägen Mischungstrennebenen besonders vorteilhafte Bettungs- und Dämpfungseigenschaften der Spikes erzielt werden.

Bei einer alternativen, gesondert nicht dargestellten Ausführung verlaufen die Trennebenen zwischen der Ummantelung 6' und dem Spikekörper-Teil 7'a sowie zwischen den Spikekörper-Teilen 7'a und 7'b waagrecht, daher im rechten Winkel zur zentralen Hochachse a des Spikes 1'.

Der Spikekörper-Teil 7'a besteht vorzugsweise aus einem Gummimaterial, welches eine besonders gute Verbindung zwischen den beiden Materialen der Ummantelung 6' und des Spikekörper-Teils 7'b sicherstellt.

Bei weiteren, alternativen und gesondert nicht dargestellten Ausführungen kann die Ummantelung 6, 6' in vertikaler Richtung höher reichen als dargestellt, insbesondere auch den Pinhalter 5b, 5'b zumindest zum Teil mitumhüllen, und vorzugsweise bei der in den Figuren 1 bis 5 gezeigten Ausführung auch komplett umhüllen.

### Bezugsziffernliste

- 1, 1: Spike
- 2, 2: Spikekörper
- 3: Spikepin
- 3a.: Endabschnitt
- 4, 4': Fußflansch
- 5, 5': Einsatz
- 5a, 5'a: Fußteil
- 5b, 5'b: Pinhalter
- 6, 6': Ummantelung
- 7: Spikekörper-Teil
- 7'a, 7'b: Spikekörper-Teil
- h: Höhe des Einsatzes
- a: Hochachse
- H: Spikehöhe
- S₁: Symmetrieebene

## Patentansprüche

1. Spike (1, 1') zum Verankern in einem Spikeloch eines Laufstreifens eines Fahrzeugluftreifens mit einem einen Fußflansch (4, 4') aufweisenden Spikekörper (2, 2') und mit einem Spikepin (3) aus Hartmetall, welcher in einem im Spikekörper (2, 2') befindlichen Einsatz (5, 5') verankert ist und mit einem Endabschnitt (3a) den Spikekörper (2, 2') überragt, wobei der Fußflansch (4, 4') seitliche Begrenzungsflächen und der Einsatz (5, 5') einen den Fußflansch (4, 4') mitbildenden Fußteil (5a, 5'a) und einen den Spikepin (3) aufnehmenden Pinhalter (5b, 5'b) aufweist, und wobei der Spikekörper (2, 2'), ggf. abgesehen vom Einsatz (5, 5'), aus nicht-metallischem Material besteht, welches am Fußflansch (4, 4') den Fußteil (5a, 5'a) ummantelt,
**dadurch gekennzeichnet,**
**dass** der Fußflansch (4, 4') zumindest bis in den Bereich seiner seitlichen Begrenzungsflächen mit einem schwingungsdämpfenden, ersten Gummimaterial ummantelt ist, wobei zumindest jener Teil (7, 7'b) des Spikekörpers (2, 2'), welcher unmittelbar an den den Spikekörper (2, 2') überragenden Endabschnitt (3a) des Spikepins (3) anschließt, aus einem abrieb- und schnittbeständiges Material, welches ein zweites Gummimaterial oder ein thermoplastisches Vulkanisat ist, besteht.

2. Spike (1) nach Anspruch 1, **dadurch gekennzeichnet, dass** der Spikekörper (2) aus dem den Fußflansch (4) zumindest zum Teil ummantelnden, schwingungsdämpfenden ersten Gummimaterial und aus dem abrieb- und schnittbeständigen Material besteht.

3. Spike (1, 1') nach Anspruch 1 oder 2, **dadurch gekennzeichnet, dass** das schwingungsdämpfende erste Gummimaterial (6, 6') den Fußflansch (4, 4') und den Pinhalter (5b, 5'b) des Einsatzes (5, 5'), letzteren zumindest zum Teil, ummantelt.

4. Spike (1') nach einem der Ansprüche 1 bis 3, **dadurch gekennzeichnet, dass** der Spikekörper (2') zwischen der Ummantelung (6') des Fußflansches (4') aus dem schwingungsdämpfenden ersten Gummimaterial und dem Spikekörper-Teil (7'b) aus dem abrieb- und schnittbeständigen Material zumindest einen weiteren Spikekörper-Teil (7'a) aus einem weiteren Gummimaterial aufweist.

5. Spike (1, 1') nach einem der Ansprüche 1 bis 4, **dadurch gekennzeichnet, dass** die Trennebene(n) zwischen den unterschiedlichen Materialien quer zur Hochachse (a) des Spikes (1, 1') verläuft bzw. verlaufen.

6. Spike (1, 1') nach einem der Ansprüche 1 bis 4, **dadurch gekennzeichnet, dass** die Trennebene(n) zwischen den unterschiedlichen Materialien schräg zur Hochachse (a) des Spikes (1, 1') verläuft bzw. verlaufen.

7. Fahrzeugluftreifen mit einem Laufstreifen mit Spikes (1, 1'), die gemäß einem oder mehreren der Ansprüche 1 bis 6 ausgeführt sind.

## Claims

1. Tyre stud (1, 1') for anchoring in a tyre stud hole of a tread of a pneumatic vehicle tire, having a tyre stud body (2, 2') which has a base flange (4, 4'), and having a tyre stud pin (3) of hard metal, which is anchored in an insert (5, 5') located in the tyre stud body (2, 2') and by way of an end portion (3a) protrudes beyond the tyre stud body (2, 2'), wherein the base flange (4, 4') has lateral delimitation faces and the insert (5, 5') has a base part (5a, 5'a) partly forming the base flange (4, 4') and has a pin holder (5b, 5'b) that holds the tyre stud pin (3), and wherein the tyre stud body (2, 2'), optionally except for the insert (5, 5'), is composed of non-metallic material which encases the base part (5a, 5'a) at the base flange (4, 4'),
**characterized in that**
the base flange (4, 4'), at least up to the region of the lateral delimitation faces thereof, is encased with a vibration-damping first rubber material, wherein at least that part (7, 7'b) of the tyre stud body (2, 2') that adjoins directly the end portion (3a) of the tyre stud pin (3) which protrudes beyond the tyre stud body (2, 2') is composed of an abrasion-resistant and cutting-resistant material which is a second rubber material or a thermoplastic vulcanizate.

2. Tyre stud (1) according to Claim 1, **characterized in that** the tyre stud body (2) is composed of the vibration-damping first rubber material which at least partially encases the base flange (4), and of the abrasion-resistant and cutting-resistant material.

3. Tyre stud (1, 1') according to Claim 1 or 2, **characterized in that** the vibration-damping first rubber material (6, 6') encases the base flange (4, 4') and the pin holder (5, 5'b) of the insert (5, 5'), the latter at least partially.

4. Tyre stud (1') according to one of Claims 1 to 3, **characterized in that** the tyre stud body (2') has at least one further tyre stud body part (7'a) composed of a further rubber material between the casing (6') of the base flange (4') composed of the vibration-damping rubber material and the tyre stud body part (7'b) composed of the abrasion-resistant and cutting-resistant material.

5. Tyre stud (1, 1') according to one of Claims 1 to 4, **characterized in that** the separation plane(s) between the different materials extends or extend transversely to the vertical axis (a) of the tyre stud (1, 1').

6. Tyre stud (1, 1') according to one of Claims 1 to 4, **characterized in that** the separation plane(s) between the different materials extends or extend obliquely to the vertical axis (a) of the tyre stud (1, 1').

7. Pneumatic vehicle tyre having a tread with tyre studs (1, 1') which are embodied according to one or a plurality of Claims 1 to 6.

## Revendications

1. Crampon (1, 1') destiné à être ancré dans un trou de crampon d'une bande de roulement d'un pneumatique de véhicule, avec un corps de crampon (2, 2') présentant une bride de pied (4, 4') et avec une broche de crampon (3) en métal dur, qui est ancrée dans un insert (5, 5') se trouvant dans le corps de crampon (2, 2') et qui, par une section d'extrémité (3a), dépasse du corps de crampon (2, 2'), la bride de pied (4, 4') présentant des surfaces de délimitation latérales et l'insert (5, 5') présentant une partie de pied (5a, 5'a) formant conjointement la bride de pied (4, 4') et un support de broche (5b, 5'b) recevant la broche de crampon (3), et le corps de crampon (2, 2'), éventuellement à exception de l'insert (5, 5'), étant constitué d'un matériau non métallique qui, au niveau de la bride de pied (4, 4'), enveloppe la partie de pied (5a, 5'a),
**caractérisé en ce que**
la bride de pied (4, 4') est enveloppée, au moins jusque dans la zone de ses surfaces de délimitation latérales, d'un premier matériau de caoutchouc amortissant les vibrations, au moins la partie (7, 7'b) du corps de crampon (2, 2') qui se raccorde directement à la section d'extrémité (3a) de la broche de crampon (3) dépassant du corps de crampon (2, 2') étant constituée d'un matériau résistant à l'abrasion et aux coupures, qui est un deuxième matériau de caoutchouc ou un vulcanisat thermoplastique.

2. Crampon (1) selon la revendication 1, **caractérisé en ce que** le corps de crampon (2) est constitué du premier matériau de caoutchouc amortissant les vibrations, enveloppant au moins en partie la bride de pied (4), et du matériau résistant à l'abrasion et aux coupures.

3. Crampon (1, 1') selon la revendication 1 ou 2, **caractérisé en ce que** le premier matériau de caoutchouc amortissant les vibrations (6, 6') enveloppe la bride de pied (4, 4') et le support de broche (5b, 5'b) de l'insert (5, 5'), ce dernier au moins en partie.

4. Crampon (1') selon l'une quelconque des revendications 1 à 3, **caractérisé en ce que** le corps de crampon (2') présente, entre l'enveloppe (6') de la bride de pied (4') en le premier matériau de caoutchouc amortissant les vibrations et la partie de corps de crampon (7'b) en le matériau résistant à l'abrasion et aux coupures, au moins une autre partie de corps de crampon (7'a) en un autre matériau de caoutchouc.

5. Crampon (1, 1') selon l'une quelconque des revendications 1 à 4, **caractérisé en ce que** le ou les plans de séparation entre les différents matériaux s'étendent transversalement à l'axe vertical (a) du crampon (1, 1').

6. Crampon (1, 1') selon l'une quelconque des revendications 1 à 4, **caractérisé en ce que** le ou les plans de séparation entre les différents matériaux s'étendent obliquement par rapport à l'axe vertical (a) du crampon (1, 1').

7. Pneumatique de véhicule avec une bande de roulement avec des crampons (1, 1'), qui sont réalisés selon une ou plusieurs des revendications 1 à 6.
